# EUROPEAN PATENT APPLICATION

(11) **EP 4 060 465 A2**
(43) Date of publication of application: **21.09.2022**
(21) Application number: 22180696.1
(22) Date of filing: 23.06.2022
(51) Int. Cl.: G06F 3/041, G06F 3/0488, G06F 3/14

(54) **METHOD AND APPARATUS FOR CONTROLLING TERMINAL, DEVICE AND STORAGE MEDIUM**

(30) Priority: 25.06.2021 CN 202110716053
(71) Applicant: Apollo Intelligent Connectivity (Beijing) Technology Co., Ltd., Beijing 100176 (CN)
(72) Inventor: HUANG, Qili, Beijing 100176 (CN); WANG, Changming, Beijing 100176 (CN); CHEN, Yanqiang, Beijing 100176 (CN)
(74) Representative: Zimmermann, Tankred Klaus

(57) **Abstract**

A method and an apparatus for controlling a terminal, a device, a storage medium and a program product are provided, relating to a field of Internet of Vehicles technology, and in particular, to a field of head unit interconnecting/mirroring technology. An implementation includes: generating a touch event corresponding to a touch operation for a screen mirroring image according to a touch position coordinate of the touch operation, in response to the touch operation, wherein the screen mirroring image corresponds to an operation interface of a terminal device; and transmitting the touch event to the terminal device through a Bluetooth connection with the terminal device based on a Bluetooth human interface device protocol, so that the terminal device controls a controlling member in the operation interface according to the touch event.

## Description

### TECHNICAL FIELD

The present disclosure relates to a field of Internet of Vehicles technology, and in particular, to a field of head unit interconnecting/mapping technology.

### BACKGROUND

With the development of the Internet of Vehicles, a head unit device in a vehicle may be interconnected with a mobile terminal. For example, users may use technologies such as USB (Universal Serial Bus) or WLAN (Wireless Local Area Network) to connect the mobile terminal such as a mobile phone with the head unit device in the vehicle. In this way, a display content of the mobile terminal is mirrored onto a display screen of the head unit device, so that the content displayed by the mobile terminal is displayed on the display screen of the head unit device.

### SUMMARY

The present disclosure provides a method and an apparatus for controlling a terminal, a device, a storage medium and a program product.

According to an aspect of the present disclosure, a method for controlling a terminal is provided, including: generating a touch event corresponding to a touch operation for a screen mirroring image according to a touch position coordinate of the touch operation, in response to the touch operation, wherein the screen mirroring image corresponds to an operation interface of a terminal device; and transmitting the touch event to the terminal device through a Bluetooth connection with the terminal device based on a Bluetooth human interface device protocol, so as to control the terminal device.

According to another aspect of the present disclosure, an apparatus for controlling a terminal is provided, including: a generating module configured to generate a touch event corresponding to a touch operation for a screen mirroring image according to a touch position coordinate of the touch operation, in response to the touch operation, wherein the screen mirroring image corresponds to an operation interface of a terminal device; and a transmitting module configured to transmit the touch event to the terminal device through a Bluetooth connection with the terminal device based on a Bluetooth human interface device protocol, so as to control the terminal device.

According to another aspect of the present disclosure, an electronic device is provided, including: at least one processor; and a memory communicatively connected with the at least one processor; wherein the memory stores instructions executable by the at least one processor, and the instructions, when executed by the at least one processor, cause the at least one processor to perform the method according to the embodiments of the present disclosure.

According to another aspect of the present disclosure, a non-transitory computer-readable storage medium storing computer instructions is provided, wherein the computer instructions are configured to cause the computer to perform the method according to the embodiments of the present disclosure.

According to another aspect of the present disclosure, a computer program product including a computer program is provided, wherein the computer program, when executed by a processor, implements the method according to the embodiments of the present disclosure.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solutions, and do not constitute a limitation to the present disclosure. Wherein:
FIG. 1 schematically shows an exemplary system architecture to which a method and an apparatus for controlling a terminal may be applied according to the embodiments of the present disclosure;
FIG. 2 schematically shows a flowchart of a method for controlling a terminal according to the embodiments of the present disclosure;
FIG. 3 schematically shows a flowchart of a method for generating a touch event corresponding to a touch operation according to the embodiments of the present disclosure;
FIG. 4A schematically shows a schematic diagram of a screen of a terminal device according to the embodiments of the present disclosure;
FIG. 4B schematically shows a schematic diagram of a screen of a screen mirroring device according to the embodiments of the present disclosure;
FIG. 4C schematically shows a schematic diagram of an interface of a terminal device displayed on a screen mirroring device according to the embodiments of the present disclosure;
FIG. 5 schematically shows a schematic diagram of a method for controlling a terminal according to the embodiments of the present disclosure;
FIG. 6 schematically shows a block diagram of an apparatus for controlling a terminal according to the embodiments of the present disclosure; and
FIG. 7 shows a schematic block diagram of an example electronic device used to implement the embodiments of the present disclosure.

### DETAILED DESCRIPTION OF EMBODIMENTS

Hereinafter, the embodiments of the present disclosure will be described with reference to the drawings. It should be understood, however, that these descriptions are merely exemplary and are not intended to limit the scope of the present disclosure. In the following detailed description, for ease of interpretation, many specific details are set forth to provide a comprehensive understanding of the embodiments of the present disclosure. However, it is clear that one or more embodiments may also be implemented without these specific details. In addition, in the following description, descriptions of well-known structures and technologies are omitted to avoid unnecessarily obscuring the concepts of the present disclosure.

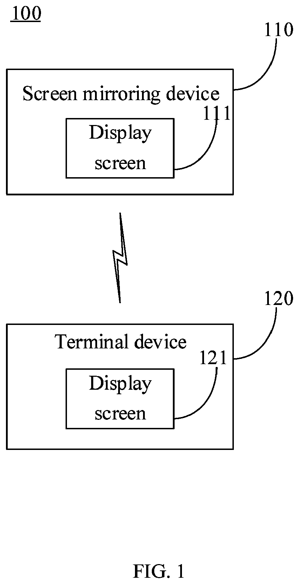

FIG. 1 schematically shows an exemplary system architecture 100 to which a method and an apparatus for controlling a terminal may be applied according to the embodiments of the present disclosure. It should be noted that FIG. 1 is only an example of a system architecture of the embodiments of the present disclosure, so as to help those skilled in the art to understand the technical content of the present disclosure, but it does not mean that the embodiments of the present disclosure may not be used in other devices, systems, environments or scenes.

As shown in FIG. 1, the system architecture 100 according to this embodiment may include a screen mirroring device 110 and a terminal device 120. The screen mirroring device 110 includes a display screen 111, and the display screen 111 may support a touch operation. The mobile terminal 120 includes a display screen 121. The display screen 121 may or may not support a touch operation.

The screen mirroring device 110 may be various electronic devices having a display screen supporting the touch operation and supporting communication with other terminals, such as a head unit device. The terminal device 120 may be various electronic devices having a display screen and supporting communication with other terminals, including but not limited to smart phones, tablet computers, laptop computers, desktop computers, etc. Various communication client applications, such as an internet of vehicle application, a web browser application, a search application, an instant communication tool, etc. may be installed in the screen mirroring device 110 and the terminal device 120.

Wired or wireless connection may be established between the terminal device 120 and the screen mirroring device 110. The wired connection may include, for example, a USB (Universal Serial Bus) connection, an HDMI (High Definition Multimedia Interface) connection, etc., and the wireless connection may include, for example, a WLAN (Wireless Local Area Network) connection, an NFC (Near Field Communication) connection, a Bluetooth connection, etc. The terminal device 120 and the screen mirroring device 110 may interact with each other through the connection between the terminal device 120 and the screen mirroring device 110. For example, the terminal device 120 may transmit an image of an operation interface displayed on the display screen 121 to the screen mirroring device 110 through the connection. After the image from the terminal device 120 is received by the screen mirroring device 110, the image may be displayed on the display screen 111 of the screen mirroring device 110, so as to implement screen mirroring. In addition, a user may perform a touch operation through the display screen 111, and the screen mirroring device 110 may generate a corresponding touch event according to the touch operation and transmit the touch event to the mobile terminal 120, so as to control the mobile terminal 120.

It should be noted that, the method for controlling a terminal provided by the embodiments of the present disclosure may be executed by the screen mirroring device 110. Correspondingly, the apparatus for controlling a terminal provided by the embodiments of the present disclosure may be provided in the screen mirroring device 110. Alternately, the method for controlling a terminal provided by the embodiments of the present disclosure may be performed by a device different from the screen mirroring device 110 and capable of communicating with the terminal device 120 and/or the screen mirroring device 110. Correspondingly, the apparatus for controlling a terminal provided by the embodiments of the present disclosure may be set in a device different from the screen mirroring device 110 and capable of communicating with the terminal device 120 and/or the screen mirroring device 110.

Those skilled in the art should understand that the number of terminal device(s) and the number of screen mirroring device(s) in FIG. 1 are only illustrative. According to implementation requirements, the number of terminal device(s) and the number of screen mirroring device(s) may be set as desired in practice.

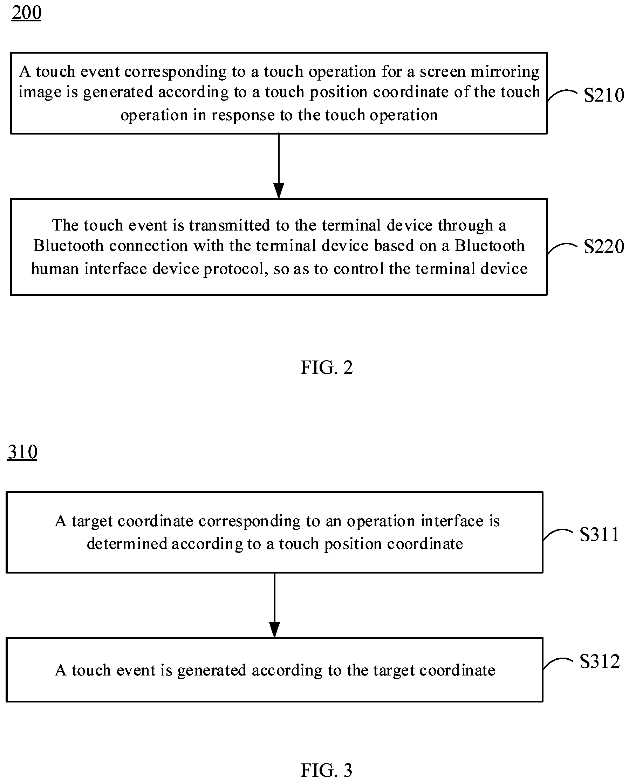

FIG. 2 schematically shows a flowchart of a method for controlling a terminal according to the embodiments of the present disclosure.

As shown in FIG. 2, the method 200 for controlling a terminal includes operations S210 to S220. The method may be performed, for example, by the screen mirroring device described above.

In operation S210, a touch event corresponding to a touch operation for a screen mirroring image is generated according to a touch position coordinate of the touch operation in response to the touch operation.

In operation S220, the touch event is transmitted to the terminal device through a Bluetooth connection with the terminal device based on a Bluetooth HID (Human Interface Device) protocol, so as to control the terminal device. The terminal device may control a control element in the operation interface according to the touch event.

According to the embodiments of the present disclosure, the screen mirroring device may establish a wired or wireless connection with the terminal device in advance. Exemplarily, the wired connection may include, for example, a USB connection and an HDMI connection, and the wireless connection may include, for example, a WLAN connection, a Bluetooth connection, etc. In operation S210, the terminal device may transmit an image of a currently displayed operation interface to the screen mirroring device through the connection in real time. After the image from the terminal device is received by the screen mirroring device, the image may be displayed on the display screen of the screen mirroring device in real time. The image displayed by the screen mirroring device is the screen mirroring image. It may be understood that the screen mirroring image corresponds to the operation interface of the terminal device.

According to the embodiments of the present disclosure, a user may perform the touch operation on the screen mirroring image displayed on the display screen of the screen mirroring device. Exemplarily, in this embodiment, the touch operation may include, for example, sliding, clicking, double-clicking, long-pressing, multi-point touching, etc. Correspondingly, the touch event may include, for example, a slide event, a click event, a double-clicking event, a long-press event, a two-finger touch event, etc.

It should be noted that, in this embodiment, according to different touch operations, the touch position coordinate of the touch operation may be one or more. For example, there is one touch position for the click operation, and there are a plurality of touch positions for the slide operation. The plurality of touch positions correspond to the sliding track of the slide operation.

In operation S220, the touch event is transmitted to the terminal device through the Bluetooth connection with the terminal device based on a Bluetooth HID (Human Interface Device) protocol, so as to control the terminal device. In this way, the terminal device controls a controlling member in the operation interface according to the touch event.

According to the embodiments of the present disclosure, in addition to the above-mentioned connection for transmitting the screen mirroring image, the screen mirroring device may establish a Bluetooth connection with the terminal device. Exemplarily, in this embodiment, when establishing the Bluetooth connection, the screen mirroring device may load a configuration file of the Bluetooth human interface device, and then the screen mirroring device acting as the Bluetooth human interface device performs matching with the terminal device to establish the Bluetooth connection.

According to the embodiments of the present disclosure, the screen mirroring device may encapsulate the touch event into a data package based on the Bluetooth human interface device protocol. Then, the data package is transmitted to a Bluetooth input interface of the terminal device through the Bluetooth connection. Exemplarily, taking a terminal device based on an open source system as an example, the Bluetooth input interface of the terminal device may be, for example, BluetoothGattService.writeToParcel.

According to the embodiments of the present disclosure, the operation interface of the terminal device may include one or more control element, such as buttons, selection boxes, scroll bars, etc. After receiving the data package, the terminal device may parse the data package to obtain the touch event, and then determines the triggered control element(s) in the operation interface according to the touch event. Then, the operation corresponding to the triggered controlling member is performed.

According to the embodiments of the present disclosure, by transmitting the touch event through the Bluetooth human interface device protocol, the terminal device may be controlled by touching the screen mirroring device, thereby improving the convenience of controlling the terminal device.

According to a related technology, interconnection applications corresponding to each other may be installed in the screen mirroring device and the terminal device respectively. A touch event is generated by the interconnection application in the screen mirroring device and then transmitted to the interconnection application in the terminal device through the wired or wireless connection. After the interconnection application in the terminal device receives the touch event, the touch event is capable to be injected and consumed in only the process of the interconnection application due to the limitation of the system. It is impossible to inject the touch event into the system level. Accordingly it is impossible to inject or consume the touch event in the processes of other applications except for the interconnection application. That is, it is impossible to achieve a cross-process controlling of other applications.

According to the embodiments of the present disclosure, the screen mirroring device transmits the touch event to the terminal device based on the Bluetooth human interface device protocol. The method for acquiring the touch event conforms to the system specification, so after receiving the touch event, the terminal device may inject the touch event into the system level in order to be consumed by the processes of various applications, thereby achieving a cross-process controlling of other applications.

In addition, in the method for controlling a terminal according to the embodiments of the present disclosure, just the turning on of Bluetooth is required. Operation of obtaining a permission, such as obtaining the developer permission in the terminal device or obtain the ROOT permission of the terminal device, is not required.

FIG. 3 schematically shows a flowchart of a method for generating a touch event corresponding to a touch operation according to the embodiments of the present disclosure.

As shown in FIG. 3, the method 310 for generating a touch event corresponding to a touch operation includes operations S311 to S312.

In operation S311, a target coordinate corresponding to an operation interface is determined according to a touch position coordinate.

In operation S312, a touch event is generated according to the target coordinate.

According to the embodiments of the present disclosure, a first resolution of a screen mirroring image and a second resolution of the operation interface may be acquired. Then, the touch position coordinate is converted into the target coordinate in the operation interface according to the first resolution and the second resolution. Next, the touch event is generated according to the target coordinate. The touch event may include, for example, a slide event, a click event, a double-click event, a long-press event, a two-finger touch event, etc.

According to the embodiments of the present disclosure, the touch position coordinate is converted into the target coordinate in the operation interface, and the touch event is generated according to the target coordinate. After receiving the touch event, the terminal device may determine, according to the touch event, a position where the touch operation occurs in the operation interface.

Since a screen resolution of the screen mirroring device may be different from a screen resolution of the terminal device, a resolution of the screen mirroring image displayed by the screen mirroring device may be different from a resolution of the operation interface of the terminal device. For example, when the screen resolutions of the screen mirroring device is different from the screen resolutions of the terminal device, a vertical height of the screen mirroring image may be set to be the same as a vertical height of the screen of the screen mirroring device, and a width of the screen mirroring image may be adaptively set according to the proportion of the operation interface corresponding to the screen mirroring image. Alternatively, the horizontal width of the screen mirroring image may be set to be the same as the horizontal width of the screen of the screen mirroring device, and the vertical height of the screen mirroring image may be adaptively set according to the proportion of the operation interface corresponding to the screen mirroring image.

In view of this, according to the embodiments of the present disclosure, the first resolution of the screen mirroring image and the second resolution of the operation interface may be acquired. The touch position coordinate is converted into the target coordinate in the operation interface according to the first resolution and the second resolution, so that the terminal device may be precisely controlled on any screen mirroring device.

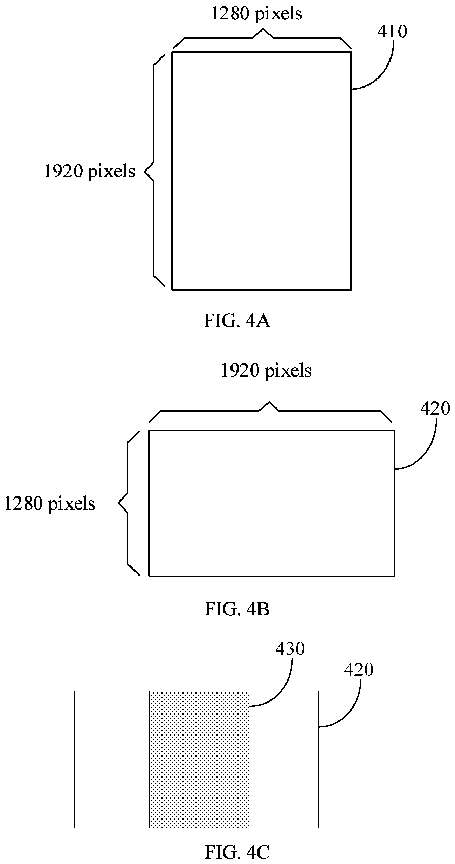

Referring to FIGS. 4A to 4C, the method for converting the touch position coordinate into the target coordinate in the operation interface will be further described below in conjunction with embodiments. Those skilled in the art may understand that the following exemplary embodiments are only for understanding the present disclosure, and the present disclosure is not limited thereto.

FIG. 4A schematically shows a schematic diagram of a screen of a terminal device according to the embodiments of the present disclosure.

As shown in FIG. 4A, for example, a resolution of a screen 410 of a terminal device may be 1920x 1280 pixels. A vertical height of the screen 410 is 1920 pixels, which may be expressed as A=1920. A horizontal width of the screen 410 is 1280 pixels, which may be expressed as B=1280.

FIG. 4B schematically shows a schematic diagram of a screen of a screen mirroring device according to the embodiments of the present disclosure.

As shown in FIG. 4B, a resolution of a screen 420 of a screen mirroring device may be 1280×1920 pixels. A vertical height of the screen 420 is 1280 pixels, which may be expressed as A1=1280. A horizontal width of the screen 420 is 1920 pixels, which may be expressed as B 1=1920.

FIG. 4C schematically shows a schematic diagram of an interface of a terminal device displayed on a screen mirroring device according to the embodiments of the present disclosure.

As shown in FIG. 4C, when a screen mirroring image 430 corresponding to the screen 410 is displayed on the screen 420, the screen mirroring image 430 may be displayed on the center of the screen 420. A vertical height of the screen mirroring image 430 is the same as the vertical height of the screen 420, and a horizontal width of the screen mirroring image 430 is adaptively set according to the proportion of the operation interface corresponding to the screen mirroring image 430. Exemplarily, in this embodiment, the vertical height of the screen mirroring image 430 is 1280 pixels, and the horizontal width may be A1^{∗}B/A=1280×1280÷1920=853 pixels. That is, the resolution of the terminal device displayed on the screen mirroring device is 1280^{∗}853 pixels.

It is assumed that a touch position coordinate of a user in the screen 420 of the screen mirroring device is (600, 200), that is, a horizontal coordinate X=600, and a vertical coordinate Y=200. A converted coordinate is calculated according to the resolution of the terminal device displayed on the screen mirroring device: a converted horizontal coordinate X'= X-(B1-A1^{∗}B/A)/2=600-(1920-1280×1280÷1920)÷2=1133, and a converted horizontal coordinate Y'=Y=200. That is, the converted coordinate is (1133, 200).

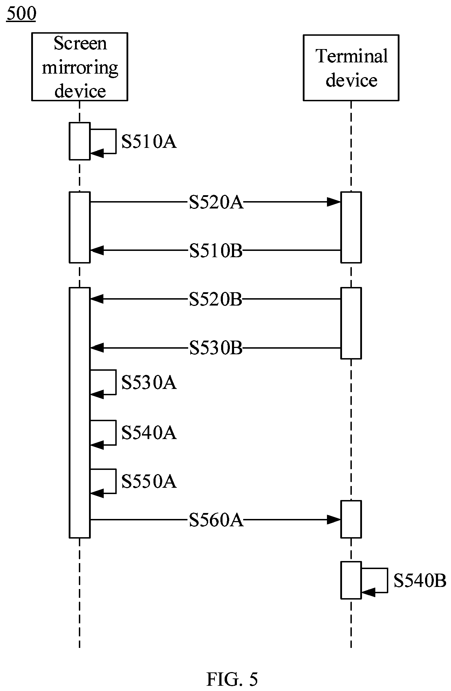

The method for controlling a terminal shown above will be further described below with reference to FIG. 5 in conjunction with specific embodiments. Those skilled in the art may understand that the following exemplary embodiments are only for understanding the present disclosure, and the present disclosure is not limited thereto.

Exemplarily, in this embodiment, the screen mirroring device may be, for example, a head unit device. The terminal device may be, for example, a mobile terminal device such as a mobile phone. The terminal device is based on the open source system.

FIG. 5 schematically shows a schematic diagram of a method for controlling a terminal according to the embodiments of the present disclosure.

As shown in FIG. 5, in operation S510A, a screen mirroring device loads a configuration file of a Bluetooth input device.

In operation S520A, the screen mirroring device initiates a Bluetooth connection request to the terminal device.

According to the embodiment of the present disclosure, the screen mirroring device may turn on Bluetooth, search for a terminal device and match with the terminal device.

In operation S510B, the terminal device receives the Bluetooth connection request, and establishes a Bluetooth connection with the terminal device.

According to the embodiments of the present disclosure, the terminal device may accept the matching, so as to establish the Bluetooth connection with the terminal device.

According to the embodiments of the present disclosure, in the process of the Bluetooth connection between the screen mirroring device and the terminal device, the screen mirroring device may serve as a master device, and the terminal device may serve as a slave device.

According to other embodiments of the present disclosure, the terminal device may also initiate a Bluetooth connection request to the screen mirroring device, and the screen mirroring device accepts the Bluetooth request to establish a Bluetooth connection between the screen mirroring device and the terminal device. This disclosure does not specifically limit this.

In operation S520B, the terminal device transmits a screen mirroring image corresponding to an operation interface to the screen mirroring device, and transmits a resolution of the operation interface to the screen mirroring device.

According to the embodiments of the present disclosure, the terminal device may transmit the screen mirroring image corresponding to the currently displayed operation interface to the screen mirroring device by means of WLAN, HDMI, or USB.

For example, when the resolution of the operation interface displayed on the terminal device changes, operation S530B may be performed to transmit the changed resolution to the screen mirroring device in real time.

In operation S530A, the screen mirroring device receives a touch operation of a user, and obtains a touch position coordinate of the touch operation.

Exemplarily, in this embodiment, the touch operation may be a slide operation. According to the embodiments of the present disclosure, the position coordinates of the track points corresponding to the sliding operation may be obtained.

In operation S540A, the screen mirroring device calculates the touch position coordinate corresponding to the terminal device according to the resolution of the screen mirroring image displayed on the screen mirroring device and the resolution of the operation interface of the terminal device.

According to the embodiments of the present disclosure, the position coordinates of the track points may be converted into coordinates in the operation interface according to the resolution of the screen mirroring screen image and the resolution of the operation interface.

In operation S550A, the screen mirroring device generates a touch event according to the touch position coordinate.

According to the embodiments of the present disclosure, the screen mirroring device may generate a touch event that supports Bluetooth transmission according to the touch position coordinate.

In operation S560A, the screen mirroring device transmits the touch event to the terminal device based on the HID protocol.

According to the embodiments of the present disclosure, the screen mirroring device may package the touch event into a data package based on the HID protocol, and transmit the data package to the terminal device through the Bluetooth connection.

In operation S540B, the terminal device consumes the touch event transmitted through Bluetooth at the system level.

Since the screen mirroring device and the terminal device are two independent devices, the screen mirroring device controls events such as a slide event, a click event, and a long-press event for the terminal device by transmitting the touch event to the terminal device. However, for the terminal device based on the open source system, since the open source system does not allow illegal events to be injected into the system, it is impossible to achieve cross-process event injection and consumption by directly transmitting the touch event. According to the embodiments of the present disclosure, the screen mirroring device transmits the touch event based on the HID protocol, and the method for transmitting the touch event conforms to the specification of the system, so that the cross-process event injection and consumption may be implemented.

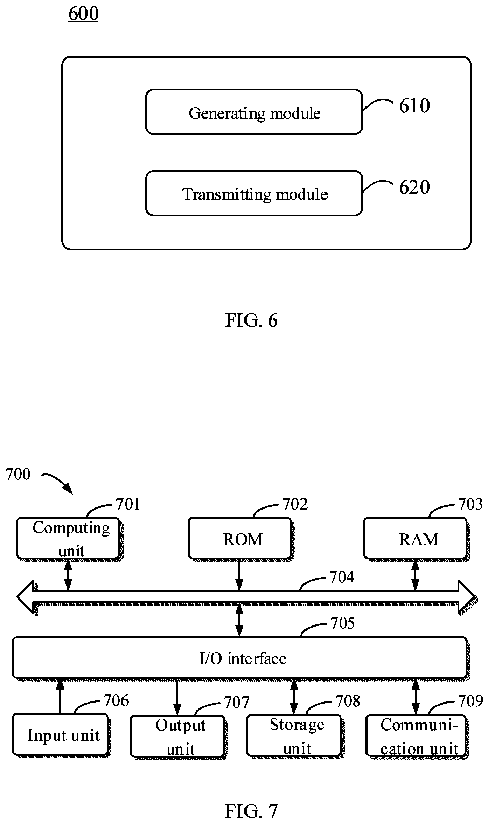

FIG. 6 schematically shows a block diagram of an apparatus for controlling a terminal according to the embodiments of the present disclosure.

As shown in FIG. 6, the apparatus 600 for controlling a terminal includes a generating module 610 and a transmitting module 620.

The generating module 610 is configured to generate a touch event corresponding to a touch operation for a screen mirroring image according to a touch position coordinate of the touch operation, in response to the touch operation, wherein the screen mirroring image corresponds to an operation interface of a terminal device.

The transmitting module 620 is configured to transmit the touch event to the terminal device through a Bluetooth connection with the terminal device based on a Bluetooth human interface device protocol, so that the terminal device controls a controlling member in the operation interface according to the touch event.

According to the embodiments of the present disclosure, the generating module may include, for example, a first determining sub-module and a generating sub-module. The first determining sub-module is configured to determine a target coordinate corresponding to the operation interface according to the touch position coordinate. The generating sub-module is configured to generate the touch event based on the target coordinate.

According to the embodiments of the present disclosure, the generating sub-module may include an acquiring sub-module and a converting sub-module. The acquiring sub-module is configured to acquire a first resolution of the screen mirroring image and a second resolution of the operation interface. The converting sub-module is configured to convert the touch position coordinate into the target coordinate in the operation interface according to the first resolution and the second resolution.

According to the embodiments of the present disclosure, the transmitting module may include an encapsulating sub-module and a transmitting sub-module. The encapsulating sub-module is configured to encapsulate the touch event into a data package based on the Bluetooth human interface device protocol. The transmitting sub-module is configured to transmit the data package to a Bluetooth input interface of the terminal device through the Bluetooth connection.

According to the embodiments of the present disclosure, the apparatus may further include a receiving module and a presenting module. The receiving module is configured to receive the screen mirroring image corresponding to the operation interface from the terminal device. The presenting module is configured to present the screen mirroring image.

According to the embodiments of the present disclosure, the apparatus may further include a loading module and an establishing module. The loading module is configured to load a configuration file of the Bluetooth human interface device. The establishing module is configured to establish the Bluetooth connection with the terminal device.

It should be noted that, collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user..

According to embodiments of the present disclosure, the present disclosure also provides an electronic device, a readable storage medium, and a computer program product.

FIG. 7 shows a schematic block diagram of an example electronic device 700 used to implement the embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 7, the device 700 includes a computing unit 701, which may execute various appropriate actions and processing according to a computer program stored in a read only memory (ROM) 702 or a computer program loaded from a storage unit 708 into a random access memory (RAM) 703. Various programs and data required for the operation of the device 700 may also be stored in the RAM 703. The computing unit 701, the ROM 702 and the RAM 703 are connected to each other through a bus 704. An input/output (I/O) interface 705 is also connected to the bus 704.

The I/O interface 705 is connected to a plurality of components of the device 700, including: an input unit 706, such as a keyboard, a mouse, etc.; an output unit 707, such as various types of displays, speakers, etc.; a storage unit 708, such as a magnetic disk, an optical disk, etc.; and a communication unit 709, such as a network card, a modem, a wireless communication transceiver, etc. The communication unit 709 allows the device 700 to exchange information/data with other devices through the computer network such as the Internet and/or various telecommunication networks.

The computing unit 701 may be various general-purpose and/or special-purpose processing components with processing and computing capabilities. Some examples of computing unit 701 include, but are not limited to, central processing unit (CPU), graphics processing unit (GPU), various dedicated artificial intelligence (AI) computing chips, various processors that run machine learning model algorithms, digital signal processing DSP and any appropriate processor, controller, microcontroller, etc. The computing unit 701 executes the various methods and processes described above, such as the method for controlling a terminal. For example, in some embodiments, the method for controlling a terminal may be implemented as computer software programs, which are tangibly contained in the machine-readable medium, such as the storage unit 708. In some embodiments, part or all of the computer program may be loaded and/or installed on the device 700 via the ROM 702 and/or the communication unit 709. When the computer program is loaded into the RAM 703 and executed by the computing unit 701, one or more steps of the method for controlling a terminal described above may be executed. Alternatively, in other embodiments, the computing unit 701 may be configured to execute the method for controlling a terminal in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage media would include electrical connections based on one or more wires, portable computer disks, hard disks, random access memory (RAM), read only memory (ROM), erasable programmable read only memory (EPROM or flash memory), optical fiber, portable compact disk read only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other. The server may be a cloud server, a server of a distributed system, or a server combined with a block chain.

It should be understood that the various forms of processes shown above may be used to reorder, add or delete steps. For example, the steps described in the present disclosure may be executed in parallel, sequentially or in a different order, as long as the desired result of the present disclosure may be achieved, which is not limited herein.

The above-mentioned specific implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method (200) for controlling a terminal, comprising:
generating (S210) a touch event corresponding to a touch operation for a screen mirroring image according to a touch position coordinate of the touch operation, in response to the touch operation, wherein the screen mirroring image corresponds to an operation interface of a terminal device; and
transmitting (S220) the touch event to the terminal device through a Bluetooth connection with the terminal device based on a Bluetooth human interface device protocol, so as to control the terminal device.

2. The method according to claim 1, wherein the generating a touch event corresponding to a touch operation for a screen mirroring image according to a touch position coordinate of the touch operation comprises:
determining (S311) a target coordinate corresponding to the operation interface according to the touch position coordinate; and
generating (S312) the touch event based on the target coordinate.

3. The method according to claim 2, wherein the determining a target coordinate corresponding to the operation interface according to the touch position coordinate comprises:
acquiring a first resolution of the screen mirroring image and a second resolution of the operation interface; and
converting the touch position coordinate into the target coordinate in the operation interface according to the first resolution and the second resolution.

4. The method according to any one of claims 1 to 3, wherein the transmitting the touch event to the terminal device through a Bluetooth connection with the terminal device based on a Bluetooth human interface device protocol comprises:
encapsulating the touch event into a data package based on the Bluetooth human interface device protocol; and
transmitting the data package to a Bluetooth input interface of the terminal device through the Bluetooth connection.

5. The method according to any one of claims 1 to 4, further comprising:
receiving the screen mirroring image corresponding to the operation interface from the terminal device; and
presenting the screen mirroring image.

6. The method according to any one of claims 1 to 5, further comprising:
loading (S510A) a configuration file of the Bluetooth human interface device; and
establishing (S510B) the Bluetooth connection with the terminal device.

7. An apparatus (600) for controlling a terminal, comprising:
a generating module (610) configured to generate a touch event corresponding to a touch operation for a screen mirroring image according to a touch position coordinate of the touch operation, in response to the touch operation, wherein the screen mirroring image corresponds to an operation interface of a terminal device; and
a transmitting module (620) configured to transmit the touch event to the terminal device through a Bluetooth connection with the terminal device based on a Bluetooth human interface device protocol, so as to control the terminal device.

8. The apparatus according to claim 7, wherein the generating module comprises:
a first determining sub-module configured to determine a target coordinate corresponding to the operation interface according to the touch position coordinate; and
a generating sub-module configured to generate the touch event based on the target coordinate.

9. The apparatus according to claim 8, wherein the generating sub-module comprises:
an acquiring sub-module configured to acquire a first resolution of the screen mirroring image and a second resolution of the operation interface; and
a converting sub-module configured to convert the touch position coordinate into the target coordinate in the operation interface according to the first resolution and the second resolution.

10. The apparatus according to any one of claims 7 to 9, wherein the transmitting module comprises:
an encapsulating sub-module configured to encapsulate the touch event into a data package based on the Bluetooth human interface device protocol; and
a transmitting sub-module configured to transmit the data package to a Bluetooth input interface of the terminal device through the Bluetooth connection.

11. The apparatus according to any one of claims 7 to 10, further comprising:
a receiving module configured to receive the screen mirroring image corresponding to the operation interface from the terminal device; and
a presenting module configured to present the screen mirroring image.

12. The apparatus according to any one of claims 7 to 11, further comprising:
a loading module configured to load a configuration file of the Bluetooth human interface device; and
an establishing module configured to establish the Bluetooth connection with the terminal device.

13. An electronic device (700), comprising:
at least one processor (701); and
a memory (708) communicatively connected with the at least one processor (701);
wherein the memory (708) stores instructions executable by the at least one processor (701), and the instructions, when executed by the at least one processor (701), cause the at least one processor to perform the method of any one of claims 1 to 6.

14. A non-transitory computer-readable storage medium storing computer instructions, wherein the computer instructions are configured to cause the computer to perform the method of any one of claims 1 to 6.

15. A computer program product comprising a computer program, wherein the computer program, when executed by a processor, implements the method of any one of claims 1 to 6.
